# EUROPEAN PATENT APPLICATION

(11) **EP 3 168 720 A1**
(43) Date of publication of application: **17.05.2017**
(21) Application number: 16194867.4
(22) Date of filing: 20.10.2016
(51) Int. Cl.: G06F 3/041, G09G 3/36

(54) **LCD PANEL, TERMINAL AND METHOD FOR PHOTO-SENSING CONTROL**

(30) Priority: 13.11.2015 CN 201510780648
(71) Applicant: Xiaomi Inc., Beijing 100085 (CN)
(72) Inventor: LI, Guosheng, Haidian District, Beijing 100085 (CN); LIU, Anyu, Haidian District, Beijing 100085 (CN); ZHANG, Yuan, Haidian District, Beijing 100085 (CN)
(74) Representative: Grunert, Marcus

(57) **Abstract**

The present disclosure relates to an LCD panel, a terminal and a method for photo-sensing control. The LCD panel includes: a backlight source (110, 310, 610A, 610B, 610C), an array substrate (130, 320, 630A, 630B, 630C), provided on the backlight source; a photosensitive device array (330, 640A, 650B, 670C), provided on the array substrate; and a control circuit, connected with the photosensitive device array. By providing the photosensitive device array (330) on the array substrate (320) of the LCD panel, it may solve a problem that a front panel of the terminal is usually required to be divided into multiple regions. Thereby, a camera function may be integrated into the LCD panel, which therefore provides a liquid display function and a camera function simultaneously, improving an overall consistency and an overall aesthetic effect of the front panel of the terminal.

## Description

### TECHNICAL FIELD

The present disclosure generally relates to the field of liquid crystal display, and more particularly, to an LCD (liquid crystal display) panel, a terminal and a method for photo-sensing control.

### BACKGROUND

A camera is a basic component commonly provided on a mobile terminal for capturing images. Cameras may be classified as front cameras and rear cameras according to their positions on the mobile terminal.

Taking the front camera for example, in the related art, a front panel of the mobile terminal includes an LCD region and a bezel region with a small hole for holding the front camera.

### SUMMARY

Accordingly, the present invention provides an LCD (liquid crystal display) panel, a terminal and a method for photo-sensing control, in accordance with the independent claims.

In order to solve the problem that a separate small hole is required for the camera, the present disclosure provides an LCD panel, a terminal and a method for photo-sensing control. The technical solution is as below:

According a first aspect of embodiments of the present disclosure, there is provided an LCD panel, including:
a backlight source;
an array substrate, provided on the backlight source;
a photosensitive device array, provided on the array substrate; and
a control circuit, connected with the photosensitive device array. "Provided on" includes being immediately consecutive to each other or having one or more layers in between.

Advantageously, the array substrate includes "mxn" pixel units, and each pixel unit includes "K" sub pixel units; and
the photosensitive device array includes a×b photosensitive devices, and each photosensitive device correspond to one of the sub pixel units, wherein a≤K×m and b≤n.

Advantageously, the sub pixel unit includes a transparent electrode region and a thin film transistor (TFT) region, and
at least one photosensitive device is positioned above the TFT region of a corresponding one of the sub pixel units.

Advantageously, the control circuit includes "a" columns of data line and "b" rows of control line, and
each row of control line is connected with "a" columns of data line via "a" switches, and each switch includes a control end connected with the control line, a first connection end connected with a corresponding one of the photosensitive device, and a second connection end connected with a corresponding one of the data lines.

Advantageously, the array substrate includes kxm columns of pixel data line and "n" rows of pixel control line, and
each column of the data line corresponds to one column of the pixel data line, and is positioned above a corresponding one of the pixel data line, and
each row of the control line corresponds to one row of the pixel control line, and is positioned above a corresponding one of the pixel control line.

Advantageously, a lens is provided at a photosensitive side of each one of the photosensitive devices.

Alternatively, a lens is provided at a photosensitive side of the photosensitive device array.

Advantageously, a liquid crystal layer is further provided on the array substrate, and
the photosensitive device array is positioned between the array substrate and the liquid crystal layer.

Alternatively, a liquid crystal layer is further provided on the array substrate, and a color filter sheet layer is further provided on the liquid crystal layer, and
the photosensitive device array is positioned between the liquid crystal layer and the color filter sheet layer.

Alternatively, a liquid crystal layer is further provided on the array substrate, a color filter sheet layer is further provided on the liquid crystal layer, and an upper polarizing sheet is further provided on the color filter sheet layer, and
the photosensitive device array is positioned between the color filter sheet layer and the upper polarizing sheet.

According to a second aspect of embodiments of the present disclosure, there is provided a terminal including an LCD panel according to the first aspect of the present disclosure. A photo-sensing control unit is further provided in the terminal, the photo-sensing control unit is connected with the data line, and the photo-sensing control unit is further connected with the control line.

According to a third aspect of embodiments of the present disclosure, there is provided a method for photo-sensing control applicable in a photo-sensing control unit which is connected with an LCD panel according to the first aspect of the present disclosure, the method including:
transmitting an enable signal to an i-th row of the control line to control a conduction between an i-th row of the photosensitive device and the data line,
if i is smaller than b, making i=i+1, and re-executing the step of transmitting an enable signal to an i-th row of the control line, and
if i is equal to b, making i=1, and re-executing the step of transmitting an enable signal to an i-th row of the control line.

The technical scheme according to embodiments of the present disclosure may have the following beneficial effects:

By providing the photosensitive device array on the array substrate of the LCD panel, it may solve a problem that a front panel of the terminal is usually required to be divided into multiple regions. Thereby, a camera function may be integrated into the LCD panel, and only the LCD panel is needed in the front panel of the terminal, which therefore provides a liquid display function and a camera function simultaneously, improving an overall consistency and an overall aesthetic effect of the front panel of the terminal.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram of an LCD panel illustrated according to the prior art;
Fig. 2 is a schematic diagram of an arrangement of the pixel units of the array substrate;
Fig. 3A is a structural schematic diagram of an LCD panel illustrated according to an exemplary embodiment;
Fig. 3B is a schematic diagram of a position of a photosensitive device illustrated according to an exemplary embodiment;
Fig. 3C is a schematic diagram of a position of a photosensitive device illustrated according to an exemplary embodiment;
Fig. 3D is a schematic diagram of a position of a photosensitive device illustrated according to an exemplary embodiment;
Fig. 4 is a schematic diagram of a control circuit illustrated according to an exemplary embodiment;
Fig. 5A is a structural schematic diagram of an LCD panel illustrated according to an exemplary embodiment;
Fig. 5B is a structural schematic diagram of an LCD panel illustrated according to an exemplary embodiment;
Fig. 6A is a structural schematic diagram of an LCD panel illustrated according to an exemplary embodiment;
Fig. 6B is a structural schematic diagram of an LCD panel illustrated according to an exemplary embodiment;
Fig. 6C is a structural schematic diagram of an LCD panel illustrated according to an exemplary embodiment;
Fig. 7 is a block diagram of a terminal illustrated according to an exemplary embodiment; and
Fig. 8 is a flow chart of a method for photo-sensing control illustrated according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

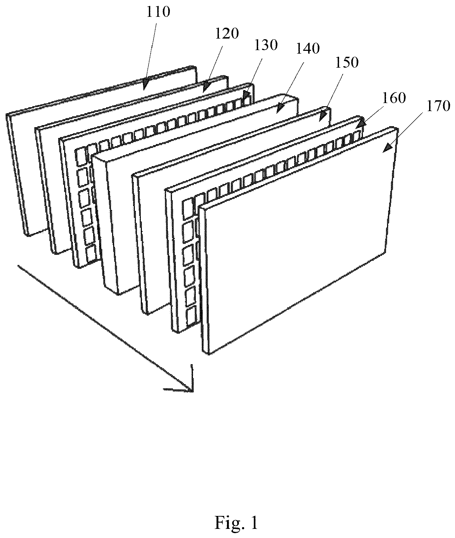

Before introducing and describing embodiments of the present disclosure, a brief introduction of an LCD (liquid crystal display) panel is made firstly. Please refer to Fig. 1 which illustrates a structural schematic diagram of an LCD panel.

As illustrated in Fig. 1, the LCD panel includes a backlight source 110, a lower polarizing sheet 120, an array substrate 130, a liquid crystal layer 140, an upper substrate 150, a color filter sheet layer 160 and an upper polarizing sheet 170.

Herein, the lower polarizing sheet 120 is positioned on the backlight source 110, the array substrate 130 is positioned on the lower polarizing sheet 120, the liquid crystal layer 140 is positioned on the array substrate 130, the upper substrate 150 is positioned on the liquid crystal layer 140, the color filter sheet layer 160 is positioned on the upper substrate 150, and the upper polarizing sheet 170 is positioned on the color filter sheet layer 160.

The backlight source 110 provides backlight to the LCD panel, which may include but not limited to anyone of EL (Electro Luminescent), CCFL (Cold Cathode Fluorescent Lamp), and LED (Light Emitting Diode)

The lower polarizing sheet 120 and the upper polarizing sheet 170 are configured to transmit light having particular direction, and a light transmission axis of the lower polarizing sheet 120 and a light transmission axis of the upper polarizing sheet 170 are perpendicular to one another.

The array substrate includes "mxn" pixel units each including "K" sub pixel units. Generally, each pixel unit includes three sub pixel units, which are an R (red) sub pixel unit, a G (green) sub pixel unit, and a B (blue) sub pixel unit, respectively. In some embodiment, each pixel unit includes four sub pixel units, which are an R (red) sub pixel unit, a G (green) sub pixel unit, a B (blue) sub pixel unit, and a W (white) sub pixel unit, respectively. That is, K may have a value of three or four.

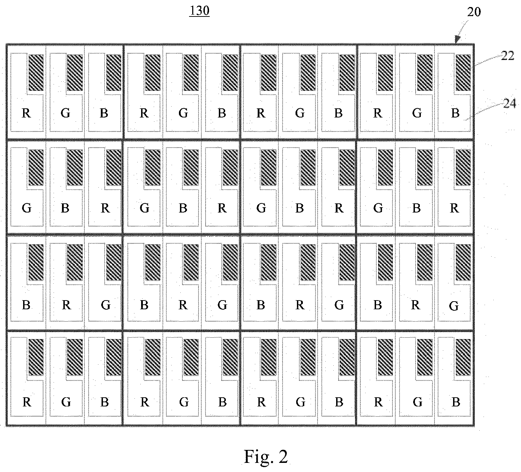

Fig. 2 schematically illustrates an arrangement of the pixel units on the array substrate 130. As illustrated in Fig. 2, the region includes 4x4 (i.e., 16) pixel units, and each pixel unit includes three sub pixel units 20. Each sub pixel unit 20 includes a TFT (thin film transistor) region 22 that is opaque and a transparent electrode region 24 that is transparent. That is, backlight provided by the backlight source 110 may pass through the transparent electrode region 24 while cannot pass through the TFT region 22.

It should be noted that Fig. 2 illustrates only a partial region of the array substrate 130, and the array substrate 130 may be made up of a plurality of regions as illustrated in Fig. 2. The arrangement illustrated in Fig. 2 is only exemplary and illustrative, and the present disclosure does not exclude other possible arrangements.

Liquid crystal molecules in the liquid crystal layer 140 are twisted under the control of the TFT region 22 in the array substrate 130 and transmit different amount of light at different twisting angles, thereby forming each gray scale of the pixel unit.

The color filter sheet layer 160 is attached onto an upper surface of the upper substrate 150, such that the LCD panel may present color images. The color filter sheet layer 160 includes color filter regions R, G and B arranged in array with three different colors (red, green and blue). The color filter regions and sub pixel units on the array substrate 130 are in one to one correspondence.

Light generated from the backlight source 110 passes, in an upward direction, successively from the lower polarizing sheet 120, to the transparent electrode region 24, the liquid crystal layer 140, the upper substrate 150, the color filter sheet layer 160, and the upper polarizing sheet 170 on the array substrate 130. The array substrate 130 generates a voltage to control the orientation of the liquid crystal molecules in the liquid crystal layer 140. The liquid crystal layer 140 changes the brightness of the light according to the orientation of the liquid crystal molecules, such that different sub pixel units corresponding to the three different colors R, G and B in the color filter sheet layer generate different gray scales, thereby displaying an image.

Since each sub pixel unit in the array substrate includes the TFT region that is opaque and the transparent electrode region that is transparent, light corresponding to the TFT region may be blocked when the light generated by the backlight source passes through the array substrate. Accordingly, when the light reaches the color filter sheet layer, black shadow blocks, also known as a BM (black matrix) region, may be formed on the portions of the color filter sheet layer which correspond to the TFT regions. The BM region has an arrangement substantially the same as or similar to that of the TFT region 22 of Fig. 2.

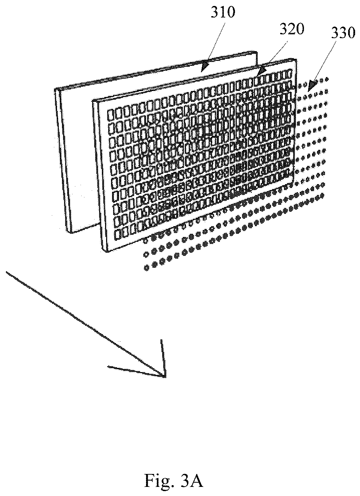

Fig. 3A is a structural schematic diagram of an LCD panel illustrated according to an exemplary embodiment. The LCD panel may be an LCD panel of an electronic device such as a mobile phone, a tablet computer, a laptop computer or the like. As illustrated in Fig. 3A, the LCD panel includes:
a backlight source 310;
an array substrate 320, provided on the backlight source;
a photosensitive device array 330, provided on the array substrate, the photosensitive device array 330 includes a plurality of photosensitive devices that are configured to capture an image in a combined manner; and
a control circuit (not illustrated), connected with the photosensitive device array 330.

Advantageously, the lower polarizing sheet as illustrated in Fig. 1 is further provided between the backlight source 310 and the array substrate 320, and the liquid crystal layer, the upper substrate, the color filter sheet, the upper polarizing sheet (not illustrated) as illustrated in Fig. 1 are further provided over the array substrate 320.

In conclusion, in the LCD panel provided in the present embodiment, the photosensitive device array is provided on the array substrate of the LCD panel, which may solve a problem that a front panel of the terminal is usually required to be divided into multiple regions. Thereby, a camera function may be integrated into the LCD panel, and only the LCD panel is needed in the front panel of the terminal, which therefore provides a liquid display function and a camera function simultaneously, improving an overall consistency and an overall aesthetic effect of the front panel of the terminal.

In the alternative embodiment provided based on the embodiment of Fig. 3A, the photosensitive device array 330 includes a×b photosensitive devices, and each photosensitive device corresponds to a sub pixel unit in the array substrate 320, where a≤K×m and b≤n. In the front view of the LCD panel, each photosensitive device has a cross sectional area smaller than the area occupied by a sub pixel unit, so as to avoid influence on normal emission of the sub pixel unit. While capturing an image, each photosensitive device is configured to capture light sensing signal of a sub pixel unit.

In one embodiment, the number of the photosensitive devices is described the following two situations.
I. The number of the photosensitive devices is equal to the number of sub pixel units in the array substrate, i.e., a=K×m, and b=n.
II. The number of the photosensitive devices is smaller than the number of sub pixel units in the array substrate, i.e., a<K×m, and b<n, or a<K×m, and b=n, or a=K×m, and b < n.

In order to avoid that the photosensitive device blocks the normal display of the sub pixel unit, dark spots due to the blocking of the photosensitive device are prevented from being formed on the LCD panel. Alternatively, there exists at least one photosensitive device having a position above the TFT region 22 of a corresponding sub pixel unit 20. In other words, since the TFT region 22 is opaque per se, each photosensitive device may be advantageously positioned above the TFT region 22 of the corresponding sub pixel unit 20. However, it is not excluded that in some embodiment, there exist some photosensitive devices having positions above the transparent electrode region 24 of the corresponding sub pixel unit 20. When the photosensitive device is formed above the transparent electrode region 24, dark spots may occur.

Generally, all of the photosensitive devices shall be positioned above the TFT region 22 of the corresponding sub pixel unit 20 in consideration of light transmission effect of the LCD panel.

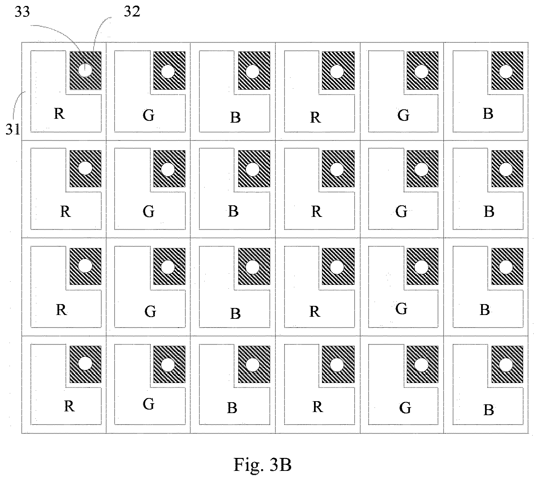

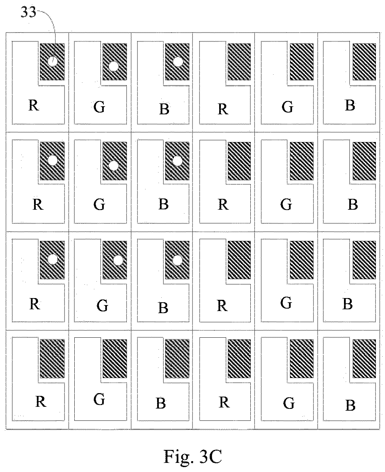

Depending on various numbers of the photosensitive devices, positions of the photosensitive devices are schematically illustrated in the following situations.
I. Photosensitive devices are provided over the entire region of the entire LCD panel, and the photosensitive devices and the sub pixel units in the array substrate are in one to one correspondence, wherein a=K×m, and b=n.
   That is, above each sub pixel unit, there is a corresponding photosensitive device. As illustrated in Fig. 3B, the LCD panel includes 2x4 pixel units, that is, 8x3=24 sub pixel units 31, and the LCD panel further includes 6x4 photosensitive devices, that is, 24 photosensitive devices. There is a corresponding photosensitive device 33 above the TFT region 32 of each sub pixel unit 31.
II. Photosensitive devices are provided in a partial region of the entire LCD panel, and the photosensitive devices and the sub pixel units in the array substrate are in one to one correspondence in the partial region, where a<K×m, and b<n, or a<K×m, and b=n, or a=K×m, and b < n.
   That is, above each sub pixel unit in the partial region of the array substrate, there is a corresponding photosensitive device. As illustrated in Fig. 3C, the LCD panel includes 2x4 pixel units, that is, 8x3=24 sub pixel units, and the LCD panel further includes 3x3=9 photosensitive devices. With respect to 9 sub pixel units in the partial region, there is a corresponding photosensitive device 33 above the TFT region of each sub pixel unit.
III. Photosensitive devices are provided over the entire region of the entire LCD panel, and the photosensitive devices correspond to a portion of the sub pixel units in the array substrate that are separately arranged, where a < Kxm, and b<n, or a < Kxm, and b=n, or a=K×m, and b < n.

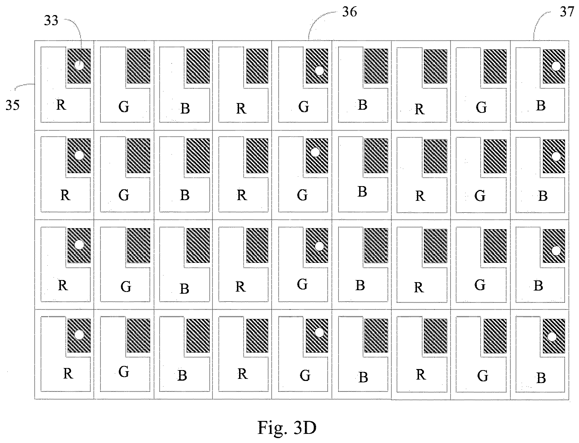

The photosensitive devices correspond to a portion of the sub pixel units in the array substrate, that is, the photosensitive devices are distributed uniformly in the entire region of the LCD panel, and each photosensitive device corresponds to a sub pixel unit while some sub pixel units do not correspond to any photosensitive device. As illustrated in Fig. 3D, the LCD panel includes 3x4=12 pixel units, that is, 12x3=36 sub pixel units, and the LCD panel further includes 3x4 photosensitive devices, that is, 12 photosensitive devices 33. Taking the first row of the array substrate for example, from left to right, in the first pixel unit a photosensitive device 33 is provided above the TFT region of the R sub pixel unit 35 thereof, in the second pixel unit a photosensitive device 33 is provided above the TFT region of the G sub pixel unit 36 thereof, and in the third pixel unit a photosensitive device 33 is provided above the TFT region of the B sub pixel unit 37 thereof.

In the present embodiment, by providing photosensitive devices above the TFT regions of the corresponding pixel units, which therefore does not affect the normal display of each sub pixel unit, it may achieve an effect of avoiding influence of the photosensitive device on the transmittance performance of the LCD panel.

It should be noted that Figs. 3B, 3C and 3D illustrate only several typical situations of the position of the photosensitive devices, and those skilled in the art may obtain other situations of the positions of the photosensitive devices by combining the above situations. The present disclosure dose not exclude other possible position distributions.

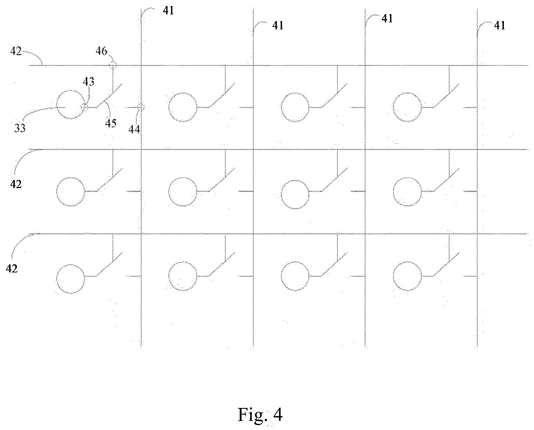

Fig. 4 exemplary illustrates a control circuit connected with the photosensitive device array 330. The control circuit includes "a" columns of data line 41 and "b" rows of control line 42.

Each row of the control line 42 is connected to "a" columns of data line 41 via "a" switches 45, and each switch 45 has a control end 46 connected with the control line 42, a first connection end 43 connected with a corresponding photosensitive device 33 and a second connection end 44 connected with a corresponding data line 41.

Assuming that the control circuit illustrated in Fig. 4 includes 3 rows of control line 42 and 4 columns of data line 41, 3x4 (i.e., 12) photosensitive devices are illustrated for example. However, numbers of "a" and "b" are not limited.

Those skilled in the art would appreciate that the array substrate further includes "Kxm" columns of pixel data line and "n" rows of pixel control line. In one embodiment, the pixel data lines and the pixel control lines are connected with the sub pixel units via TFT devices, so as to control the twisting angle of the liquid crystal in each sub pixel unit on the array substrate. The control circuit made up of the pixel data line and the pixel control line connecting the TFT in the array substrate is similar to that illustrated in Fig. 4, which is not repeated herein.

Generally, in consideration of light transmission effect of the LCD panel, control lines connected with the photosensitive devices shall correspond to the corresponding pixel control lines on the array substrate, and data lines connected with the photosensitive devices shall correspond to the corresponding pixel data lines on the array substrate.

Advantageously, each column of data line corresponds to a column of pixel data line, and each column of data line is positioned above the corresponding pixel data line.

If the column number of the data line equals to that of the pixel data line, i.e., if a=K×m, data lines and pixel data lines are in one to one correspondence, and the data lines are positioned above the corresponding pixel data lines. In a front view of the LCD panel, positions of the data lines and positions of the pixel data lines are overlapped.

If the column number of the data line is smaller than that of the pixel data line, i.e., if a<K×m, the "a" columns of data line correspond to a pixel data line, respectively, and the data lines are positioned above the corresponding pixel data lines. In the front view of the LCD panel, positions of the data lines and positions of a portion of the pixel data lines are overlapped.

Advantageously, each row of control line corresponds to a row of pixel control line, and each row of control line is positioned above the corresponding pixel control line.

If the row number of the control line equals to that of the pixel control line, i.e., if b=n, control lines and pixel control lines are in one to one correspondence, and the control lines are positioned above the corresponding pixel control lines. In the front view of the LCD panel, positions of the control lines and positions of the pixel control lines are overlapped.

If the row number of the control line is smaller than that of the pixel control line, i.e., if b<n, the "b" rows of control line correspond to a pixel control line, respectively, and the control lines are positioned above the corresponding pixel control lines. In the front view of the LCD panel, positions of the control lines and positions of a portion of the pixel control lines are overlapped.

In the present embodiment, by respectively corresponding data lines and control lines of the control circuit connected to the photosensitive device array with pixel data lines and pixel control lines in the array substrate, and positioning the data lines above the corresponding pixel data lines and positioning the control lines above the corresponding pixel control lines, which therefore does not affect the normal display of each sub pixel unit, it may achieve an effect of avoiding influence of the photosensitive device on the transmittance performance of the LCD panel.

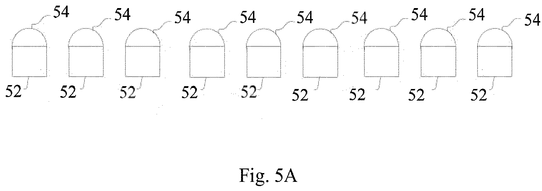

In an alternative embodiment provided based on the embodiment of Fig. 3A, a lens is provided at a photosensitive side of each photosensitive device. That is, a number of the lens is equal to a number of the photosensitive device. As illustrated in Fig. 5A, a lens 54 is provided above each photosensitive device 52. Alternatively, the lens 54 is a half lens with a convex surface structure.

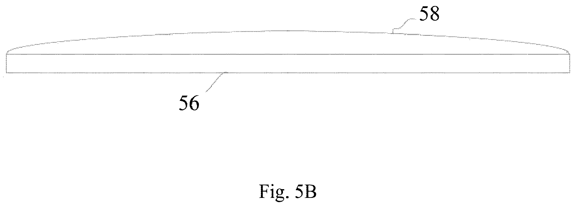

Alternatively, a lens may be further provided at a photosensitive side of photosensitive device array. That is, a lens that may cover all the photosensitive devices is provided on the photosensitive device array. As illustrated in Fig. 5B, a lens 58 is provided on the photosensitive device array 56. Advantageously, the lens 58 is a half lens with a convex surface structure. Advantageously, the lens 58 is provided on the upper polarizing sheet illustrated in Fig. 1.

In the present embodiment, by providing a lens at the photosensitive side of the photosensitive device or the photosensitive side of photosensitive device array, which therefore may improve a light sensing range of the photosensitive device, it may achieve an effect of capturing images with better effect.

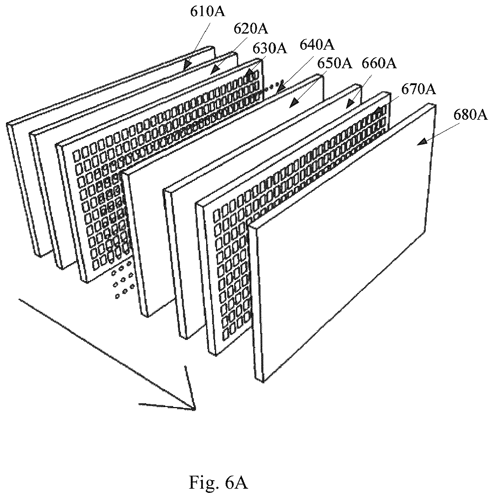

In an alternative embodiment provided based on the embodiment of Fig. 3A, a photosensitive device array is positioned between the array substrate and the liquid crystal layer. As illustrated in Fig. 6A, the LCD panel includes a backlight source 610A, a lower polarizing sheet 620A, an array substrate 630A, a photosensitive device array 640A, a liquid crystal layer 650A, an upper substrate 660A, a color filter sheet layer 670A, and an upper polarizing sheet 680A.

Herein, the lower polarizing sheet 620A is positioned on the backlight source 610A, the array substrate 630A is positioned on the lower polarizing sheet 620A, the photosensitive device array 640A is positioned on the array substrate 630A, the liquid crystal layer 650A is positioned on the photosensitive device array 640A, the upper substrate 660A is positioned on the liquid crystal layer 650A, the color filter sheet layer 670A is positioned on the upper substrate 660A, and the upper polarizing sheet 680A is positioned on the color filter sheet layer 670A. That is, the photosensitive device array 640A is positioned between the array substrate 630A and the liquid crystal layer 650A.

Advantageously, a lens (not illustrated) is provided at a photosensitive side of each photosensitive device of the LCD panel.

Alternatively, a lens (not illustrated) is provided at a photosensitive side of photosensitive device array of the LCD panel.

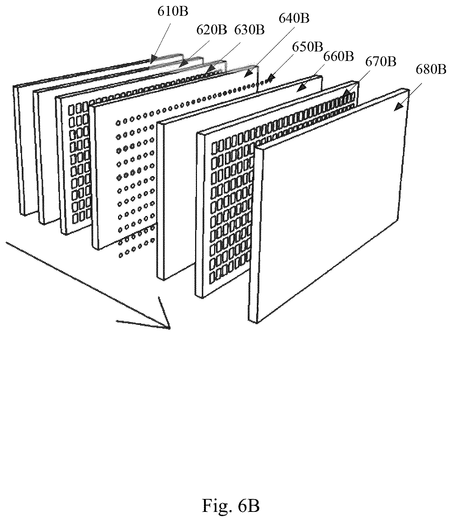

In an alternative embodiment provided based on the embodiment of Fig. 3A, a photosensitive device array is positioned between the liquid crystal layer and the color filter sheet layer. As illustrated in Fig. 6B, the LCD panel includes:
a backlight source 610B, a lower polarizing sheet 620B, an array substrate 630B, a liquid crystal layer 640B, a photosensitive device array 650B, an upper substrate 660B, a color filter sheet layer 670B, and an upper polarizing sheet 680B.

Herein, the lower polarizing sheet 620B is positioned on the backlight source 610B, the array substrate 630B is positioned on the lower polarizing sheet 620B, the liquid crystal layer 640B is positioned on the array substrate 630B, the photosensitive device array 650B is positioned on the liquid crystal layer 640B, the upper substrate 660B is positioned on the photosensitive device array 650B, the color filter sheet layer 670B is positioned on the upper substrate 660B, and the upper polarizing sheet 680B is positioned on the color filter sheet layer 670B. That is, the photosensitive device array 650B is positioned between the liquid crystal layer 640B and the color filter sheet layer 670B.

Advantageously, a lens (not illustrated) is provided at a photosensitive side of each photosensitive device of the LCD panel.

Alternatively, a lens (not illustrated) is provided at a photosensitive side of photosensitive device array of the LCD panel.

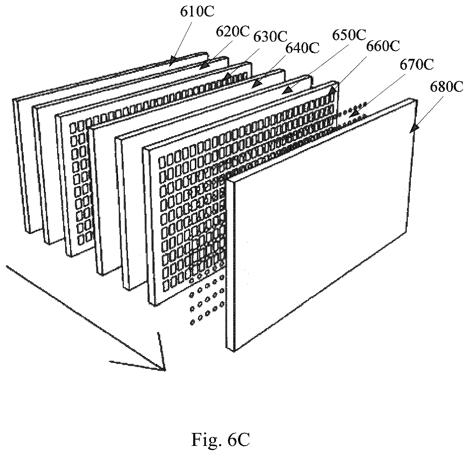

In an alternative embodiment provided based on the embodiment of Fig. 3A, a photosensitive device array is positioned between the color filter sheet layer and the upper polarizing sheet. As illustrated in Fig. 6C, the LCD panel includes:
a backlight source 610C, a lower polarizing sheet 620C, an array substrate 630C, a liquid crystal layer 640C, an upper substrate 650C, a color filter sheet layer 660C, a photosensitive device array 670C, and an upper polarizing sheet 680C.

Herein, the lower polarizing sheet 620C is positioned on the backlight source 610C, the array substrate 630C is positioned on the lower polarizing sheet 620C, the liquid crystal layer 640C is positioned on the array substrate 630C, the upper substrate 650C is positioned on the liquid crystal layer 640C, the color filter sheet layer 660C is positioned on the upper substrate 650C, the photosensitive device array 670C is positioned on the color filter sheet layer 660C, and the upper polarizing sheet 680C is positioned on the photosensitive device array 670C. That is, the photosensitive device array 670C is positioned between the color filter sheet layer 660C and the color filter sheet layer 680C.

Advantageously, a lens (not illustrated) is provided at a photosensitive side of each photosensitive device of the LCD panel.

Alternatively, a lens (not illustrated) is provided at a photosensitive side of photosensitive device array of the LCD panel.

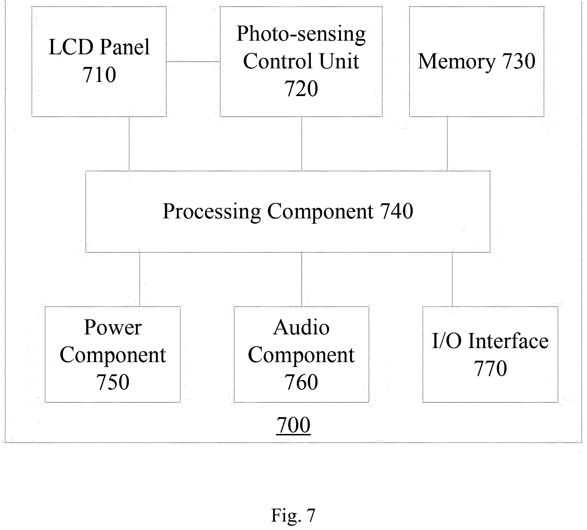

Fig. 7 is a block diagram of a terminal illustrated according to an exemplary embodiment of the present disclosure. As illustrated in Fig. 7, the terminal 700 includes a LCD panel 710, a photo-sensing control unit 720, a memory 730, a processing component 740, a power component 750, an audio component 760, and an input/output (I/O) interface 770.

The LCD panel 710 may be an LCD panel illustrated in any one of Figs 3A, 5A, 5B, 6A, 6B and 6C provided in the above embodiments.

The photo-sensing control unit 720 is connected with the control circuit in the LCD panel 710. The photo-sensing control unit 720 is connected with each data line in the control circuit, respectively. The photo-sensing control unit 720 is connected with each control line in the control circuit, respectively. The control circuit is connected with the photosensitive device array in the LCD panel 710.

The memory 730 is configured to store various types of data to support the operation of the device 700. Examples of such data include instructions for any applications or methods operated on the device 700, contact data, phonebook data, messages, pictures, video, etc. The memory 730 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The processing component 740 typically controls overall operations of the device 700, such as the operations associated with display, telephone calls, data communications, camera operations, and recording operations. The processing component 740 may include one or more processors to execute instructions to perform all or part of the steps in the above described methods. Moreover, the processing component 740 may include one or more modules which facilitate the interaction between the processing component 740 and other components.

The power component 750 provides power to various components of the device 700. The power component 750 may include a power management system, one or more power sources, and any other components associated with the generation, management, and distribution of power in the device 700.

The audio component 760 is configured to output and/or input audio signals. For example, the audio component 760 includes a microphone ("MIC") configured to receive an external audio signal when the device 700 is in an operation mode, such as a call mode, a recording mode, and a voice recognition mode. The received audio signal may be further stored in the memory. In some embodiments, the audio component 760 further includes a speaker to output audio signals.

The I/O interface 770 provides an interface between the processing component 740 and peripheral interface modules, such as a keyboard, a click wheel, buttons, and the like. The buttons may include, but are not limited to, a home button, a volume button, a starting button, and a locking button.

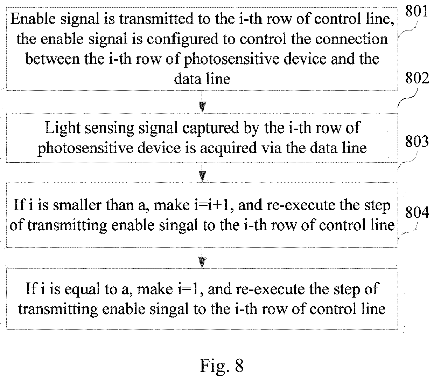

Fig. 8 is a flow chart of a method for photo-sensing control illustrated according to an exemplary embodiment. In the present embodiment, for example, the method for photo-sensing control is applied in the photo-sensing control unit in the terminal as illustrated in Fig. 7. The method includes the following steps.

In step 801, an enable signal is transmitted to an i-th row of the control line, and the enable signal is configured to control the conduction between an i-th row of the photosensitive device and the data line.

The enable signal is configured to control the conduction between the i-th row of the photosensitive device and the data line. The photo-sensing control unit transmits the enable signal to the i-th row of the control line in the control circuit, and the i-th row of the photosensitive device is in connection with the data line of the control circuit in response to the enable signal.

For example, assuming that the control circuit illustrated in Fig. 4 includes 4 columns of data line 41 and 3 rows of control line 42, and each row includes 4 photosensitive devices 33, i.e., totally 12 photosensitive devices 33. When the photo-sensing control unit transmits the enable signal to the first row of control line 41, all the switches 45 in the first row is turned on, and the 4 photosensitive devices 33 in the first row are in connection with corresponding data lines 41.

In step 802, light sensing signal captured by the i-th row of photosensitive device is acquired via the data lines.

The photo-sensing control unit acquires the light sensing signal captured by the i-th row of photosensitive device via the data lines. After acquiring the light sensing signal, the light sensing signal may be transmitted to the photo-sensing control unit only when photosensitive devices are connected with the data lines.

For example, assuming that the control circuit illustrated in Fig. 4 includes 4 columns of data line 41 and 3 rows of control line 42, and each row includes 4 photosensitive devices 33, i.e., totally 12 photosensitive devices 33. When the 4 photosensitive devices 33 in the first row are in connection with corresponding data lines 41, the photo-sensing control unit may acquire the light sensing signal captured by the 4 photosensitive devices 33 via 4 columns of data line 41.

The light sensing signal received in the photo-sensing control unit is an analog signal, the analog signal is converted into digital signal by an A/D convertor, and the digital signal is stored in the memory.

In step 803, if i is smaller than b, make i=i+1, and the step of transmitting enable signal to the i-th row of control is re-executed.

A row number of the control line is represented by i, and a row number of the control line is represented by b. If i is smaller than b, make i=i+1, and the photo-sensing control unit transmit the enable signal to the i+1-th row of control line. If i=b, step 804 is executed.

For example, assuming that the control circuit illustrated in Fig. 4 includes 8 row of control line, when the photo-sensing control unit transmits the enable single to the third row of control line for a predetermined period, i equals to 3 at this time, which is smaller than 8. Then, i is assigned with a value of 4, and the enable signal is transmitted to the fourth row of the control line. This procedure is repeated until the enable signal is transmitted to the 8^{th} row of control line. That is, the photo-sensing control unit transmits the enable signal to the control lines progressively every predetermined time intervals.

In step 804, when i=b, make i=1, and the step of transmitting enable signal to the i-th row of control is re-executed.

When i is equals to b, make i=1, and the photo-sensing control unit transmits the enable single to the first row of control line. That is, when the photo-sensing control unit has transmitted the enable signal to all the control lines once, it may start transmitting the enable single again to the control lines from the first row of control line.

After executing the step 804, the step 801 is started again, and steps 801 to 804 are executed repeatedly. That is, i has an initial value of 1, and the enable signal is transmitted progressively to the uppermost row of control line till the lowest row of control line, thereby capturing the light sensing signal corresponding to the current frame. After that, once again, the enable signal is transmitted progressively to the uppermost row of control line till the lowest row of control line, thereby capturing the light sensing signal corresponding to the next frame.

In conclusion, in the method for photo-sensing control provided in the present embodiment, by transmitting enable signal successively and progressively to the control lines in the control circuit from the photo-sensing control unit, photosensitive devices in the control circuit are in connection with the data lines, and the photo-sensing control unit receives continuously the light sensing signal via the connected data lines and processes the light sensing signal. Thereby, a camera function may be integrated into the LCD panel, and only the LCD panel is needed in the front panel of the terminal, which therefore provides a liquid display function and a camera function simultaneously, improving an overall consistency and an overall aesthetic effect of the front panel of the terminal.

## Claims

1. A liquid crystal display (LCD) panel, **characterized in** comprising:
a backlight source (110, 310, 610A, 610B, 610C);
an array substrate (130, 320, 630A, 630B, 630C), provided on the backlight source;
a photosensitive device array (330, 640A, 650B, 670C), provided on the array substrate; and
a control circuit, connected with the photosensitive device array.

2. The LCD panel according to claim 1, wherein,
the array substrate comprises "mxn" pixel units, and each pixel unit comprises "K" sub pixel units; and
the photosensitive device array comprises a×b photosensitive devices, and each photosensitive device corresponds to one of the sub pixel units,
wherein a≤K×m and b≤n.

3. The LCD panel according to claim 2, wherein
the sub pixel unit comprises a transparent electrode region and a thin film transistor (TFT) region, and
at least one photosensitive device is positioned above the TFT region of a corresponding one of the sub pixel units.

4. The LCD panel according to claim 2 or 3, wherein the control circuit comprises "a" columns of data line and "b" rows of control line, and
each row of control line is connected with "a" columns of data line via "a" switches, and each switch comprises a control end connected with the control line, a first connection end connected with a corresponding one of the photosensitive device, and a second connection end connected with a corresponding one of the data lines.

5. The LCD panel according to claim 4, wherein the array substrate comprises Kxm columns of pixel data line and "n" rows of pixel control line, and
each column of the data line corresponds to one column of the pixel data line, and is positioned above a corresponding one of the pixel data line, and
each row of the control line corresponds to one row of the pixel control line, and is positioned above a corresponding one of the pixel control line.

6. The LCD panel according to any one of claims 2 to 5, wherein a lens (54) is provided at a photosensitive side of each one of the photosensitive devices (52).

7. The LCD panel according to any one of claims 1 to 5, wherein a lens (58) is provided at a photosensitive side of the photosensitive device array (56).

8. The LCD panel according to any one of claims 1 to 7, wherein a liquid crystal layer (140, 650A) is further provided on the array substrate, and
the photosensitive device array is positioned between the array substrate and the liquid crystal layer.

9. The LCD panel according to any one of claims 1 to 7, wherein a liquid crystal layer (140, 640B) is further provided on the array substrate, and a color filter sheet layer (160, 670A, 670B, 660C) is further provided on the liquid crystal layer, and
the photosensitive device array is positioned between the liquid crystal layer and the color filter sheet layer.

10. The LCD panel according to any one of claims 1 to 7, wherein a liquid crystal layer (140, 640C) is further provided on the array substrate, a color filter sheet layer is further provided on the liquid crystal layer, and an upper polarizing sheet (170, 680A, 680B, 680C) is further provided on the color filter sheet layer, and
the photosensitive device array is positioned between the color filter sheet layer and the upper polarizing sheet.

11. A terminal, **characterized in** comprising an LCD panel according to any one of claims 1 to 10.

12. The terminal according to claim 11, wherein the LCD panel is an LCD panel (710) according to claim 4 or clam 5, and
a photo-sensing control unit (720) is further provided in the terminal (700), and connected with the data line and the control line.

13. A method for photo-sensing control, which is applicable in a photo-sensing control unit connected with an LCD panel according to claim 4 or clam 5, **characterized in** the method comprising:
transmitting an enable signal to an i-th row of the control line to control a conduction between an i-th row of the photosensitive device and the data line,
if i is smaller than b, making i=i+1, and re-executing the step of transmitting an enable signal to an i-th row of the control line, and
if i is equal to b, making i=1, and re-executing the step of transmitting an enable signal to an i-th row of the control line.
